(19) **Europäisches Patentamt**
**European Patent Office**
**Office européen des brevets**

(11) **EP 4 708 329 A1**

(12) **EUROPEAN PATENT APPLICATION**

(43) Date of publication:
**11.03.2026 Bulletin 2026/11**

(21) Application number: **25199555.1**

(22) Date of filing: **02.09.2025**

(51) International Patent Classification (IPC):
**G21C 17/00** (2006.01)    **G01M 13/028** (2019.01)
**G21D 3/00** (2006.01)    **G05B 23/00** (2006.01)

(52) Cooperative Patent Classification (CPC):
**G21C 17/00; G01M 13/028; G21C 17/12;
G21D 3/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.09.2024 JP 2024152080**

(71) Applicant: **Hitachi GE Vernova Nuclear Energy,
Ltd.
Hitachi-shi, Ibaraki 317-0073 (JP)**

(72) Inventors:
• **NAKAMURA, Akihiro
Tokyo, 100-8280 (JP)**

• **MIURA, Hiroki
Ibaraki, 317-0073 (JP)**
• **MATSUSHITA, Yuichi
Ibaraki, 317-0073 (JP)**
• **KANAI, Tsukasa
Ibaraki, 317-0073 (JP)**
• **FURUTA, Yasuhiko
Ibaraki, 317-0073 (JP)**

(74) Representative: **MERH-IP Matias Erny Reichl
Hoffmann
Patentanwälte PartG mbB
Paul-Heyse-Straße 29
80336 München (DE)**

(54) **ABNORMALITY DETECTION DEVICE, ABNORMALITY DETECTION METHOD, AND
PROGRAM FOR CONTROL ROD DRIVE DEVICE**

(57) An abnormality detector comprises a specific section extractor, a feature amount calculator, and an abnormality diagnoser. The specific section extractor divides, into specific section data, phase current caused to flow through an electric motor used in a control rod drive device, and extracts the specific section data. The feature amount calculator calculates a feature amount for use in diagnosis in the abnormality diagnoser. The abnormality diagnoser diagnoses a presence or absence of abnormality of the control rod drive device based on the feature amount. The feature amount calculator calculates a natural frequency of the entire control rod drive device based on an electrical parameter of the electric motor and a mechanical parameter of the control rod drive device, and calculates the feature amount by using the natural frequency and an applied voltage frequency to the electric motor.

FIG. 1

EP 4 708 329 A1

**Description**

**BACKGROUND OF THE INVENTION**

Field of the Invention

The present invention relates to an abnormality detector, an abnormality detection method, and a program for a control rod drive device.

Description of the Related Art

In recent years, there has been a situation in which spread of IoT (Internet of Things) and high development of AI (Artificial Intelligence) are present along with a decrease in working population. For this reason, techniques of actively using information acquired by sensors and the like in a maintenance operation have been attracting attention for the purpose of increasing the efficiency of the maintenance work and reducing the workforce. Among these, in control rod drive devices of nuclear power generation facilities as well, a diagnosis method using sensor information has been proposed for reducing amounts of inspection work, and the like. Although the types of sensors include vibration sensors and position sensors as representative examples, an approach using current sensors has been particularly attracting attention because they are easy to install, and other reasons.

For example, Patent Literature 1 discloses a method for diagnosing a low-speed abnormal operation by detecting a situation that the current of an electric motor (motor) which drives a control drive device is lower than a reference value.

In addition, Patent Literature 2 discloses a method for diagnosing abnormality of a reducer by extracting an amplitude peak value in a frequency region corresponding to a natural vibration frequency which the reducer connected to an electric motor has from a frequency spectrum of current of the electric motor, although the content is not dedicated to a nuclear power generation facility.

Prior Art Document(s)

Patent Literature(s)

Patent Literature 1: JP2010-133894A
Patent Literature 2: JP2018-105782A

**SUMMARY OF THE INVENTION**

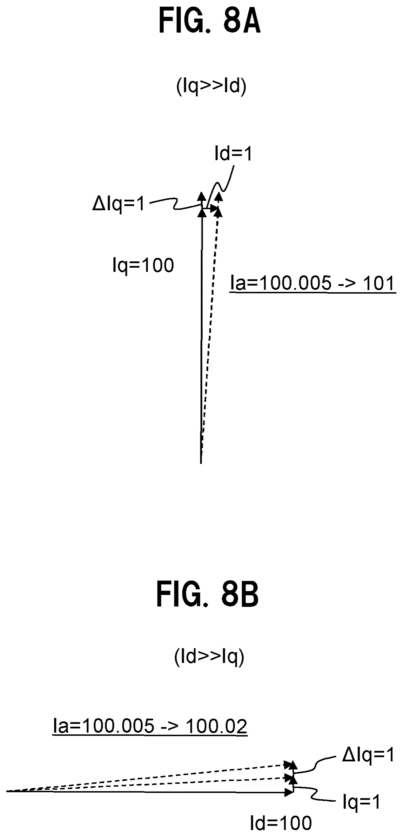

However, the conventional technique described in Patent Literature 1 has a problem that there is a possibility that abnormality of a control drive device cannot be detected depending on an electrical parameter of an electric motor (motor) used in the control drive device. For example, there is a possibility that the conventional technique described in Patent Literature 1 cannot detect abnormality depending on a ratio between a D-axis current Id which contributes to generation of magnetic flux in an electric motor and a Q-axis current Iq which contributes to generation of torque. This point will be described below with reference to FIG. 8A and FIG. 8B. FIG. 8A is an explanatory diagram showing how current changes when the Q-axis current Iq>>the D-axis current Id. FIG. 8B is an explanatory diagram showing how current changes when the D-axis current Id>>the Q-axis current Iq. Note that the "D axis" indicates a direction which coincides with a magnetic line from the north pole to the south pole of a permanent magnet. In addition, the "Q axis" indicates a direction which intersects the D axis at 90 degrees.

For example, it is assumed that as shown in FIG. 8A, the Q-axis current Iq has changed in a state where the Q-axis current Iq is larger than the D-axis current Id. In this case, the Q-axis current Iq reacts with a change in load, and an amount of change $\Delta$Iq of the Q-axis current Iq also influences the entire electric motor current Ia to the same extent. Hence, the conventional technique described in Patent Literature 1 can detect a generation of abnormality by using an effective value of a phase current of the electric motor, or the like. However, for example, in the case where the Q-axis current Iq is sufficiently smaller than the D-axis current Id as shown in FIG. 8B, even if the Q-axis current Iq has changed, an influence of the amount of change $\Delta$Iq of the Q-axis current Iq on the entire electric motor current Ia becomes small. In this case, even when abnormality of the control rod drive device involving a pulse-like load fluctuation occurs, an instantaneous change in current becomes small due to the aforementioned principle, and further when an effective value or an average value of the phase current is calculated in this state, the amount of change $\Delta$Iq of the Q-axis current Iq becomes smaller. Hence, depending on the ratio between the D-axis current and the Q-axis current, there is a possibility that the amount of change ΔIq of the Q-axis current Iq is buried in a measurement noise or the like, and abnormality of the control rod drive device cannot be detected.

In addition, the conventional technique described in Patent Literature 2 has a problem that there is a possibility that abnormality of a drive device cannot be detected depending on a mechanical parameter of the drive device. For example, in the case where a drive device has a structure in which resonance is unlikely to occur, there is a case where it is difficult for the conventional technique described in Patent Literature 2 to catch vibration with an electric motor current. For example, the conventional technique described in Patent Literature 2 performs diagnosis by utilizing the phenomenon that the amplitude of the natural vibration frequency of the mechanical device to be diagnosed increases when abnormality has occurred. However, some mechanical devices to be diagnosed have a structure in which a spring component or a damper component is small, so that resonance is unlikely to occur. For this reason, in the case where a drive device has a structure in which resonance is unlikely to occur, there is a case where vibration is difficult to catch with electric motor current even when a pulse-like load fluctuation has occurred.

The present invention has been made to solve the above-described problem, and a main object thereof is to provide an abnormality detector, an abnormality detection method, and a program which prevent a situation in which abnormality of a drive device cannot be detected, by using an electrical parameter of an electric motor (motor) used in the drive device and a mechanical parameter of the drive device.

In order to achieve the above-described object, the present invention is an abnormality detector for a control rod drive device, comprising: a specific section extractor which divides, into specific section data, phase current caused to flow through an electric motor used in a control rod drive device which conducts an inserting operation and a pulling-out operation of a control rod into and from a reactor core, and extracts the specific section data; a feature amount calculator which calculates a feature amount for use in diagnosis of the control rod drive device; and/or an abnormality diagnoser which diagnoses a presence or absence of abnormality of the control rod drive device based on the feature amount, wherein the feature amount calculator calculates a natural frequency of the entire control rod drive device based on an electrical parameter of the electric motor and a mechanical parameter of the control rod drive device, and calculates the feature amount by using the natural frequency and an applied voltage frequency to the electric motor.

According to the present invention, it is possible to prevent a situation in which abnormality of a drive device cannot be detected, by using an electrical parameter of an electric motor (motor) used in the drive device and a mechanical parameter of the drive device.

**BRIEF DESCRIPTION OF THE DRAWINGS**

FIG. 1 is a schematic configuration diagram of a control rod drive device and an abnormality detector according to the present embodiment.

FIG. 2 is a schematic configuration diagram of the control rod drive device.

FIG. 3 is a hardware configuration diagram showing an example of a computer achieving functions of the abnormality detector.

FIG. 4 is a flowchart showing an operation of the abnormality detector.

FIG. 5 is a graph showing time-series data of an electric motor current.

FIG. 6 is an explanatory diagram showing an example of a first feature amount.

FIG. 7 is an explanatory diagram showing an example of a second feature amount.

FIG. 8A is a diagram showing how current changes when a Q-axis current Iq>>a D-axis current Id.

FIG. 8B is a diagram showing how current changes when a D-axis current Id>>a Q-axis current Iq.

**DETAILED DESCRIPTION OF THE EMBODIMENTS**

Hereinafter, a mode for carrying out the present invention (hereinafter, referred to as the "present embodiment") will be described in detail with reference to the drawings. Note that each drawing only schematically shows the embodiment to such an extent that the present invention can be sufficiently understood. Hence, the present invention is not limited to the examples shown. In addition, in each drawing, common components or similar components are denoted by the same signs, and repetitive descriptions thereof are omitted.

<Configurations of Control Rod Drive Device and Abnormality Detection Device>

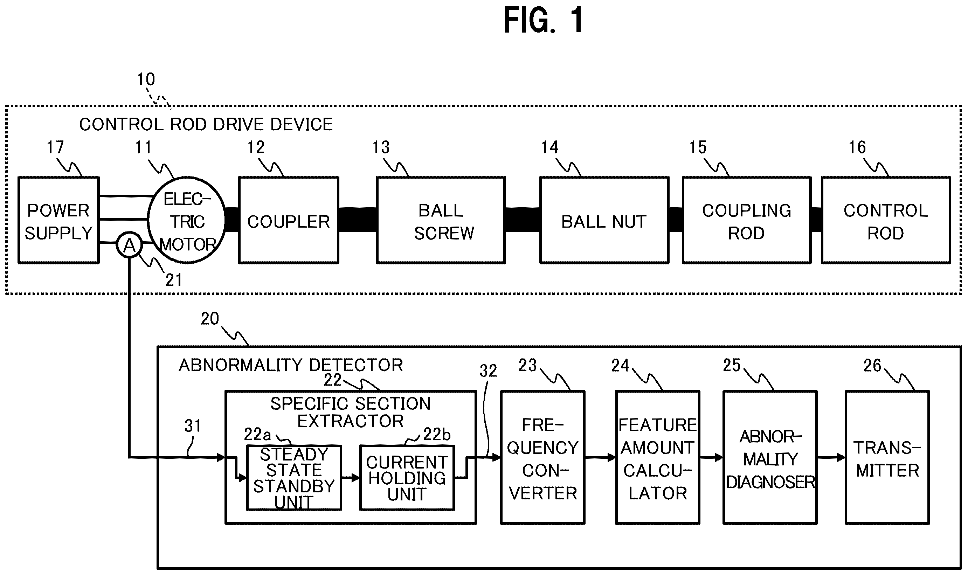

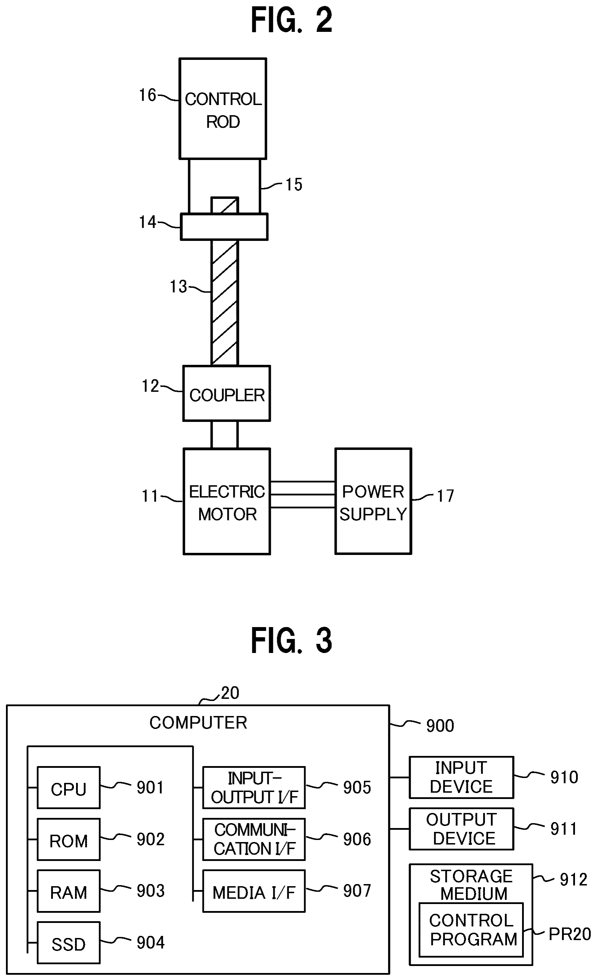

Hereinafter, configurations of a control rod drive device 10 and an abnormality detector 20 according to the present embodiment will be described with reference to FIG. 1 and FIG. 2. The abnormality detector 20 is a device which detects the presence or absence of abnormality of the control rod drive device 10. The control rod drive device 10 is a device which moves a control rod 16 upward and downward (inserting and pulling out) for controlling an output power of a nuclear reactor in a nuclear power generation facility. FIG. 1 is a schematic configuration diagram of the abnormality detector 20 according to the present embodiment. FIG. 2 is a schematic configuration diagram of the control rod drive device 10.

The present embodiment will be described on the assumption that the abnormality detector 20 receives an input of single-phase electric motor phase current flowing through an electric motor 11 (motor) used in the control rod drive device 10 and detects the presence or absence of abnormality of the control rod drive device 10. Here, first, the configuration of the control rod drive device 10 will be described, and then, the configuration of the abnormality detector 20 will be described.

The control rod drive device 10 conducts an inserting operation and a pulling-out operation of the control rod into and from a reactor core in a nuclear power generation facility. As shown in FIG. 1 and FIG. 2, the control rod drive device 10 includes an electric motor 11, a coupler 12, a ball screw 13, a ball nut 14, a coupling rod 15, a control rod 16, and a power supply 17 for conducting these operations.

The power supply 17 supplies cyclic 3-phase rectangular wave voltage (voltage shifted by 120 degrees for each phase) or sinusoidal wave voltage to the electric motor 11 with an open loop (feed-forward) control to drive the electric motor 11. Note that although the description of the present embodiment is made with a rectangular wave voltage only, the same applies to the case where the drive is made with a sinusoidal wave voltage. The type of the electric motor 11 may be any of a magnet motor, a stepping motor, and an induction motor.

The shaft of the electric motor 11 driven by the power supply 17 is coupled to the ball screw 13 by the coupler 12, and rotates synchronously. The rotation of the shaft of the electric motor 11 causes the ball nut 14 to move upward and downward, and the coupling rod 15 and the control rod 16 disposed on the ball nut 14 also move upward and downward. In such a control rod drive device 10, abnormality involving a pulse-like load fluctuation occurs due to, for example, biting of a foreign matter, a shortage of a lubricating oil, contact with a housing, falling of a component, and the like.

The abnormality detector 20 detects such abnormality involving a pulse-like load fluctuation of the control rod drive device 10. As shown in FIG. 1, the abnormality detector 20 according to the present embodiment includes a specific section extractor 22, a frequency converter 23, a feature amount calculator 24, an abnormality diagnoser 25, and a transmitter 26.

The specific section extractor 22 is a component which divides a phase current (electric motor phase current 31) which is caused to flow through the electric motor 11 (motor) used in the control rod drive device 10 conducting the inserting operation and the pulling-out operation of the control rod 16 into and from the reactor core into specific section data (section current data 32), and extracts the specific section data (section current data 32).

The frequency converter 23 is a component which converts a phase current (electric motor phase current 31) to a frequency region signal. The frequency converter 23 converts specific section data (section current data 32) from a time region signal to a frequency region signal.

The feature amount calculator 24 is a component which calculates a feature amount for use in diagnosis in the abnormality diagnoser 25. The feature amount calculator 24 calculates a natural frequency of the entire control rod drive device 10 based on an electrical parameter of the electric motor 11 (motor) and a mechanical parameter of the control rod drive device 10, and calculates the feature amount by using the natural frequency and an applied voltage frequency to the electric motor 11 (motor).

The abnormality diagnoser 25 is a component which diagnoses the presence or absence of abnormality of the control rod drive device 10 based on the feature amount.

The transmitter 26 is a component which transmits desired information to an outside. The transmitter 26 transmits a result of the diagnosis of the control rod drive device 10, which is conducted by the abnormality diagnoser 25, to any one or more of a control device (not shown) of the control rod drive device 10, a control device (not shown) of the electric motor 11 (motor), as well as a control system (not shown), a display (not shown), a speaker (not shown), and a lamp (not shown) of the power plant (not shown).

The abnormality detector 20 is electrically connected to the control rod drive device 10 via a current sensor 21. The current sensor 21 is a component which functions as a current acquirer which acquires an electric motor phase current 31 flowing through the electric motor 11 used in the control rod drive device 10.

Note that the abnormality detector 20 according to the embodiment is achieved by a computer 900 having a configuration as shown in FIG. 3, for example. FIG. 3 is a hardware configuration diagram showing an example of the computer 900 achieving the functions of the abnormality detector 20. The computer 900 includes a CPU 901, a ROM 902, a RAM 903, an SSD 904, an input-output interface 905 (described as INPUT-OUTPUT I/F (Interface) in FIG. 3), a communication interface 906 (described as COMMUNICATION I/F in FIG. 3), and a media interface 907 (described as MEDIA I/F in FIG. 3). The computer 900 may include an HDD (Hard Disc Drive) instead of the SSD 904, or may further include an HDD in addition to the SSD 904. In addition, the computer 900 is connected to an input device 910 such as a keyboard or a mouse and an output device 911 such as a display.

The CPU 901 operates based on a control program PR20 stored in the ROM 902 or the SSD 904 to achieve each component in FIG. 1. The ROM 902 stores a boot program which is executed by the CPU 901 at the time of booting the computer 900, programs related to the hardware of the computer 900, and the like. The control program PR20 is stored in a storage medium 912, and is installed into the computer 900 from the storage medium 912. Alternatively, the control program PR20 is stored in a server which is not shown, and is downloaded from the server into the computer 900 via a network which is not shown.

<Operation of Abnormality Detection Device>

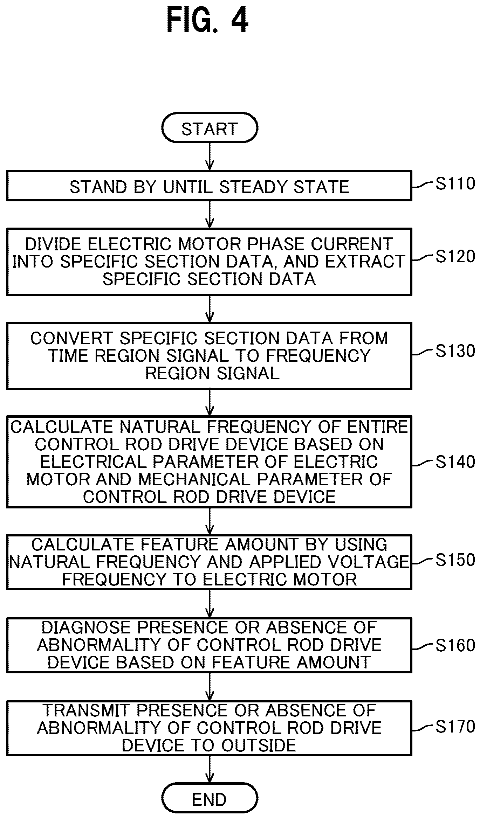

Hereinafter, an operation of the abnormality detector 20 will be described with reference to FIG. 4. FIG. 4 is a flowchart showing the operation of the abnormality detector 20.

The abnormality detector 20 receives an input of at least single-phase electric motor phase current 31 from the control rod drive device 10 by using the current sensor 21 (current acquirer) as current data (time-series data). The electric motor phase current 31 is multiple-phase (for example, three-phase) current which is caused to flow through the electric motor 11. The electric motor phase current 31 inputted into the abnormality detector 20 as current data (time-series data) is inputted into a steady state standby unit 22a of the specific section extractor 22. Then, as shown in FIG. 4, the abnormality detector 20 stands by until the electric motor phase current 31 of the electric motor 11 turns into a steady state in the steady state standby unit 22a of the specific section extractor 22 (step S110).

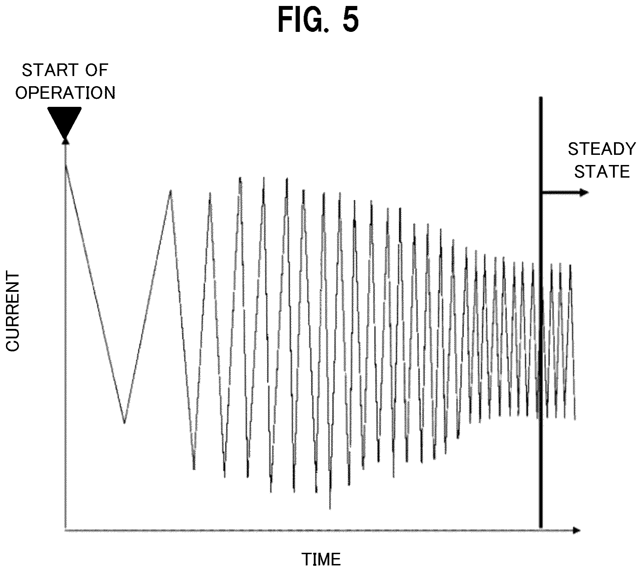

This processing of step S110 will be described with reference to FIG. 5. FIG. 5 is a graph showing time-series data of the electric motor phase current 31. In the control rod drive device 10, the electric motor 11 accelerates or decelerates immediately after the start of the operation (the start of driving the ball screw 13) or immediately before the stop of the operation. Hence, as shown in FIG. 5, the frequency or the amplitude of the electric motor phase current 31 transiently changes. Since the phase and the amplitude of the electric motor phase current 31 in the transient state are unstable, the electric motor phase current 31 is inappropriate as data for use in diagnosing (detecting) the presence or absence of abnormality of the control rod drive device 10. Hence, the abnormality detector 20 stands by until the amplitude or the frequency of the electric motor phase current 31 falls within a certain range (for example, within ±1% or the like), that is, until the electric motor phase current 31 falls into a steady state, by using the steady state standby unit 22a of the specific section extractor 22. Note that at this time, the abnormality detector 20 may be configured not to wait for the amplitude or the frequency of the electric motor phase current 31 to fall within a certain range, but to stand by until a specific time or specific cycle elapses after the start of operation of the control rod drive device 10. That is, the abnormality detector 20 stands by until the phase current (electric motor phase current 31) falls into the steady state after a specific time has elapsed or after the cyclic fluctuation of the current has reached a specific number of times after the electric motor 11 (motor) started driving.

Referring back to FIG. 4, after step S110, the abnormality detector 20 extracts section current data 32 (specific section data) by dividing the electric motor phase current 31 at an interval of specific time and holding the divided electric motor phase current 31 by using the current holding unit 22b of the specific section extractor 22 (step S120). The section current data 32 (specific section data) extracted at this time is a time region signal showing current data in time-series format (time-series data of phase current). Note that the "specific time" is a time width calculated in advance in consideration of a noise level, and the like necessary for diagnosing (detecting) the presence or absence of abnormality of the control rod drive device 10 in frequency conversion, which is executed later, and is time of around several seconds, for example.

After step S120, the abnormality detector 20 converts the section current data 32 (specific section data) extracted in step S120 from the time region signal to a frequency region signal by using the frequency converter 23 (step S130). That is, the abnormality detector 20 converts the section current data 32 from the current data in time-series format to current data in frequency format. The conversion method includes, for example, Fast Fourier Transform (FFT) and the like.

After step S130, the abnormality detector 20 calculates a natural frequency of the entire control rod drive device 10 based on an electrical parameter of the electric motor 11 (motor) and a mechanical parameter of the control rod drive device 10 by using the feature amount calculator 24 (step S140). The processing of step S140 is conducted by calculating/extracting a value relating to an amplitude value of a frequency band which serves as a criterion for extracting a feature amount for use in diagnosing (detecting) the presence or absence of abnormality of the control rod drive device 10. The frequency which serves as a criterion for extracting a feature amount is a natural frequency fr which is determined from the electrical parameter of the electric motor 11 (motor) used in the control rod drive device 10 and the mechanical parameter of the control rod drive device 10. The frequency which serves as a criterion for extracting a feature amount is expressed by the following formula (1), and the feature amount calculator 24 calculates the frequency in advance by calculation, simulation, or the like.

$$fr \propto \alpha \times \frac{p}{2\pi \times \sqrt{j \times L}} \quad ... (1)$$

Here, p represents the number of pole pairs of the electric motor 11. In addition, L represents the inductance of the electric motor 11. In addition, J represents a composite inertia of the electric motor 11 and the driven device (control rod drive device 10). In addition, $\alpha$ represents a proportionality coefficient, and is a value determined based on the magnitude of the power supply voltage applied to the electric motor 11, the frequency of the power supply voltage, the induction voltage constant of the electric motor 11, and the like.

After step S140, the abnormality detector 20 calculates a feature amount by using the natural frequency of the entire control rod drive device 10, which is calculated in step S140, and the applied voltage frequency to the electric motor 11 (motor), by using the feature amount calculator 24 (step S150).

After step S150, the abnormality detector 20 diagnoses (detects) the presence or absence of abnormality of the control rod drive device 10 based on the feature amount calculated in step S150, by using the abnormality diagnoser 25 (step S160). The abnormality diagnoser 25 diagnoses (detects) the presence or absence of abnormality of the control rod drive device 10 by using machine learning, statistical approach, or the like.

After step S160, the abnormality detector 20 transmits the result of the diagnosis of the control rod drive device 10 to a desired external component, by using the transmitter 26 (step S170). The transmitter 26 transmits the result of the diagnosis of the control rod drive device 10 to a worker or another system.

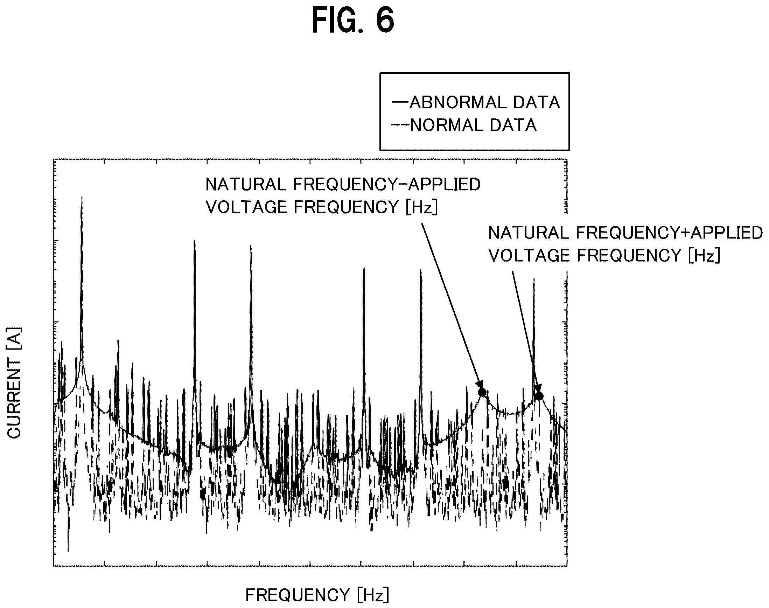

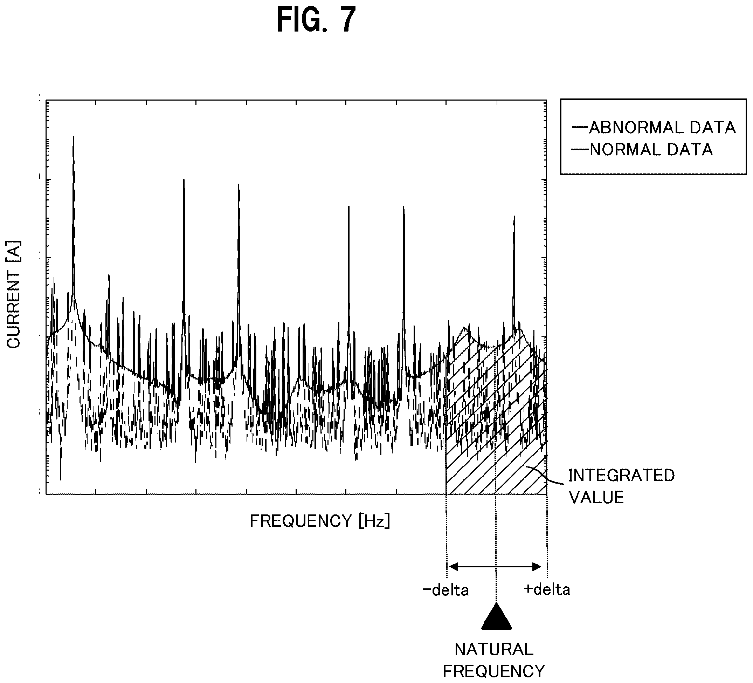

Note that the natural frequency of the present embodiment is different from the natural frequency described in Patent Literature 2 in the following point. The natural frequency described in Patent Literature 2 is a resonant frequency which is determined only from the structure of a mechanical device. On the other hand, the natural frequency of the present embodiment is a natural vibration frequency which is generated in an electrical system (the electrical parameter of the electric motor 11) and a mechanical system (the mechanical parameter of the control rod drive device 10) regarding an input as a torque and an output as a phase current. In the case where there has been a pulse-like load fluctuation (fluctuation in torque), the speed of the shaft of the electric motor rapidly changes due to the fluctuation in torque, and the change in speed changes the induction voltage of the electric motor to change a Q-axis current Iq. The vibration frequency generated by the rapid change in speed at this time is the natural frequency fr shown in formula (1). In addition, when the Q-axis current Iq is converted to phase current, the natural frequency is divided into two frequencies, that is, "natural frequency $\pm$ applied voltage frequency of formula (1)", due to the principle of two-phase to three-phase conversion. Based on such premise, the feature amount extracted by the feature amount calculator 24 will be described below. The feature amount calculator 24 can extract one of the first feature amount shown in FIG. 6 and the second feature amount shown in FIG. 7.

The first feature amount includes an "amplitude component in natural frequency $\pm$ applied voltage frequency of formula (1)". FIG. 6 is an explanatory diagram showing an example of the first feature amount. In the example shown in FIG. 6, the feature amount calculator 24 extracts, as the feature amount, one or both of an amplitude component of (the natural frequency + the applied voltage frequency) and an amplitude component of (the natural frequency-the applied voltage frequency). That is, the feature amount calculator 24 extracts, as the feature amount, one or both of two peak values of the frequencies shown in FIG. 6 at the time of abnormality diagnosis.

The second feature amount includes an "integrated value of a range expanding from the natural frequency by predetermined frequency widths delta [Hz]". FIG. 7 is an explanatory diagram showing an example of the second feature amount. In the example shown in FIG. 7, the feature amount calculator 24 sets a predetermined frequency width as delta, and calculates, as the feature amount, an integrated value of frequency amplitude components in a range from (the natural frequency-the frequency width delta) to (the natural frequency + the frequency width delta). As a reference value of the frequency width delta, a value of the power supply frequency may be favorably used. Here, the description is given on the assumption that the frequency width delta is set to, for example, a desired value in a range of several tens to several hundreds Hz in advance. Note that there is a tendency that the feature amount of the second example provides a larger difference between a normal time and an abnormal time than the feature amount of the first example. For this reason, it is favorable to use an integral which is the second feature amount in the case where a detection sensitivity is required.

Here, the operation of the abnormality diagnoser 25 will be supplementarily described. Here, the description will be given on the assumption that the abnormality diagnoser 25 conducts the abnormality diagnosis by any of the following approaches (1), (2), and (3).

(1) The abnormality diagnoser 25 may determine whether or not the aforementioned feature amount is more than or equal to a threshold, and output binary data of normal/abnormal, for example.

(2) In addition, the abnormality diagnoser 25 may acquire a plurality of samples of feature amounts at the normal time and calculate an average value and a variance value of the samples in advance, calculate a Mahalanobis distance (MTD) by using the following formula (2), and output a continuous value thus calculated as the degree of abnormality of the control rod drive device 10. Note that the method for calculating the degree of abnormality of the control rod drive device 10 is not limited to the method using formula (2), and an approach of machine learning or deep learning such as One-Class SVM may be used.

$$MTD = \frac{(Feature\_meas - Feature\_normal\_ave)^2}{Feature\_normal\_disp} \quad ... \ (2)$$

Here, Feature_meas represents a feature amount desired to be diagnosed. In addition, Feature_normal_ave represents an average value of feature amounts at the normal time. In addition, Feature_normal_disp represents a variance value of the feature amounts at the normal time.

(3) Moreover, by calculating an average value and a variance value of feature amounts of both specific section data at the normal time and specific section data desired to be diagnosed, a test of a difference between the average values (two-sample t-test) can be conducted. Hence, a result of the test may be output.

In addition, here, the operation of the transmitter 26 will be supplementarily described. The transmitter 26 transmits a result of the diagnosis of the presence or absence of abnormality conducted by the abnormality diagnoser 25 in step S160 to a display (not shown), a speaker (not shown), a lamp (not shown), or the like of the abnormality detector 20. In this way, the abnormality detector 20 notifies the worker of the condition of the control rod drive device 10. In addition, the transmitter 26 may transmit the result of the diagnosis of the presence or absence of abnormality conducted by the abnormality diagnoser 25 to a control device (not shown) of the control rod drive device 10, a control device (not shown) of the electric motor 11 (motor), and a control system (not shown) of the power plant (not shown) in addition to these. In addition, the abnormality detector 20 may utilize the result of the diagnosis of the presence or absence of abnormality conducted by the abnormality diagnoser 25 as feedback data for device controls such as emergency shutdown and fallback.

Such an abnormality detector 20 can detect abnormality involving a pulse-like load fluctuation of the control rod drive device 10.

<Major Characteristics of Abnormality Detection Device>

The abnormality detector 20 according to the present embodiment may be configured to have the following characteristics.

(1) As shown in FIG. 1, an abnormality detector 20 according to the present embodiment comprises a specific section extractor 22, a feature amount calculator 24, and an abnormality diagnoser 25. The specific section extractor 22 is a component which divides, into specific section data (section current data 32), phase current (electric motor phase current 31) caused to flow through an electric motor 11 (motor) used in a control rod drive device 10 which conducts an inserting operation and a pulling-out operation of a control rod 16 into and from a reactor core, and extracts the specific section data. The feature amount calculator 24 is a component which calculates a feature amount for use in diagnosis by the abnormality diagnoser 25. The abnormality diagnoser 25 is a component which diagnoses a presence or absence of abnormality of the control rod drive device 10 based on the feature amount. The feature amount calculator 24 calculates a natural frequency of the entire control rod drive device 10 based on an electrical parameter of the electric motor 11 (motor) and a mechanical parameter of the control rod drive device 10, and calculates the feature amount by using the natural frequency and an applied voltage frequency to the electric motor 11 (motor).

The abnormality detector 20 according to the present embodiment can detect abnormality involving a pulse-like load fluctuation which occurs in the control rod drive device 10, even at the time of such a drive condition of an electric motor that D-axis current Id>>Q-axis current Iq, or in a situation where resonance of a mechanical device to be diagnosed is unlikely to occur. Such an abnormality detector 20 can prevent a situation in which abnormality of the control rod drive device 10 cannot be detected, by using the electrical parameter of the electric motor 11 (motor) used in the control rod drive device 10 and the mechanical parameter of the control rod drive device 10.

(2) In the abnormality detector 20 of the item (1), the electric motor 11 (motor) is any one of a stepping motor, a magnet motor, and an induction motor.

Since the electric motor 11 (motor) is any one of a stepping motor, a magnet motor, and an induction motor, the abnormality detector 20 according to the present embodiment can detect abnormality involving a pulse-like load fluctuation which occurs in the control rod drive device 10.

(3) The abnormality detector 20 of the item (1) further comprises a frequency converter 23 which converts the phase current (electric motor phase current 31) to a frequency region signal. The phase current (electric motor phase current 31) falls into a steady state after a specific time has elapsed or after a cyclic fluctuation of a current has reached a specific number of times after the electric motor 11 (motor) started driving. Thereafter, the specific section extractor 22 extracts the specific section data (section current data 32) by dividing the phase current (electric motor phase current 31) at a predetermined time width. The frequency converter 23 converts the specific section data from a time region signal to a frequency region signal. The feature amount calculator 24 calculates the natural frequency of the entire control rod drive device 10 based on the electrical parameter of the electric motor 11 (motor) and the mechanical parameter of the control rod drive device 10.

The abnormality detector 20 according to the present embodiment extracts specific section data (section current data 32) after the phase current (electric motor phase current 31) falls into a steady state, and converts the specific section data to a frequency region signal. Then, the abnormality detector 20 calculates the natural frequency of the entire control rod drive device 10 based on the electrical parameter of the electric motor 11 (motor) and the mechanical parameter of the control rod drive device 10. Such an abnormality detector 20 can prevent a situation in which abnormality of the control rod drive device 10 cannot be detected, by using the electrical parameter of the electric motor 11 (motor) used in the control rod drive device 10 and the mechanical parameter of the control rod drive device 10.

(4) As shown in FIG. 6, in the abnormality detector 20 of the item (3), the feature amount calculator 24 extracts, as the feature amount, one or both of an amplitude component of (the natural frequency + the applied voltage frequency) and an amplitude component of (the natural frequency-the applied voltage frequency).

The abnormality detector 20 according to the present embodiment can extract (calculate) the feature amount by using the natural frequency and the applied voltage frequency. The abnormality detector 20 can diagnose the presence or absence of abnormality of the control rod drive device 10 based on the feature amount.

(5) As shown in FIG. 7, in the abnormality detector 20 of the item (3), the feature amount calculator 24 sets a predetermined frequency width as delta, and calculates, as the feature amount, an integrated value of a frequency amplitude component in a range from (the natural frequency-the frequency width delta) to (the natural frequency + the frequency width delta).

The abnormality detector 20 according to the present embodiment can calculate the feature amount by using the natural frequency and the frequency width delta. The abnormality detector 20 can diagnose the presence or absence of abnormality of the control rod drive device 10 based on the feature amount.

(6) In the abnormality detector 20 of the item (4) or the item (5), the feature amount calculator 24 calculates the natural frequency of the entire control rod drive device 10 by using the following function. The function contains the number of pole pairs and inductance of the electric motor 11 as the electrical parameters of the electric motor 11 (motor) and contains a composite inertia of the control rod drive device 10 and the electric motor 11 (motor) as the mechanical parameter of the control rod drive device 10.

The abnormality detector 20 according to the present embodiment calculates the natural frequency of the entire control rod drive device 10 by using the function which contains the number of pole pairs and inductance of the electric motor 11 and also contains the composite inertia of the control rod drive device 10 and the electric motor 11 (motor). Such an abnormality detector 20 can prevent a situation in which abnormality of the control rod drive device 10 cannot be detected, by using an electrical parameter of the electric motor 11 (motor) used in the control rod drive device 10 and a mechanical parameter of the control rod drive device 10.

(7) The abnormality detector 20 of the item (6) further comprises a transmitter 26 which transmits desired information to an outside. The transmitter 26 transmits a result of the diagnosis of the control rod drive device 10 conducted by the abnormality diagnoser 25 to any one or more of a display (not shown), a speaker (not shown), and a lamp (not shown) of the abnormality detector 20 as well as a control device (not shown) of the control rod drive device 10, a control device (not shown) of the electric motor 11 (motor), and a control system (not shown) of a power plant (not shown).

The abnormality detector 20 according to the present embodiment can transmit a result of the diagnosis of the control rod drive device 10 to a desired component.

(8) In the abnormality detector 20 of the item (1), the abnormality diagnoser 25 acquires a plurality of feature amounts at a normal time as sample values, calculates an average value and a variance value of the sample values in advance, and calculates a Mahalanobis distance at the time of diagnosis. Then, the abnormality diagnoser 25 diagnoses the presence or absence of abnormality of the control rod drive device 10 based on the Mahalanobis distance.

The abnormality detector 20 according to the present embodiment can diagnose the presence or absence of abnormality of the control rod drive device 10 based on the Mahalanobis distance.

(9) In the abnormality detector 20 of the item (1), the abnormality diagnoser 25 acquires a feature amount at a normal time as a sample value, and calculates an average value and a variance value of the feature amount at the normal time and a feature amount of specific section data (section current data 32) desired to be diagnosed at the time of diagnoses. Then, the abnormality diagnoser 25 conducts a test (two-sample t-test) on a difference between the average values based on the average value and the variance value of the feature amount of the specific section data (section current data 32) to diagnoses the presence or absence of abnormality of the control rod drive device 10.

The abnormality detector 20 according to the present embodiment can diagnose the presence or absence of abnormality of the control rod drive device 10 based on the average value and the variance value of the feature amount of the specific section data (section current data 32).

(10) As shown in FIG. 4, an abnormality detection method according to the present embodiment comprises: a specific section extraction step (step S120); a feature amount calculation step (step S150); and an abnormality diagnosis step (step S160). The specific section extraction step (step S120) is a step of dividing, into specific section data (section current data 32), phase current (electric motor phase current 31) caused to flow through an electric motor 11 (motor) used in a control rod drive device 10 which conducts an inserting operation and a pulling-out operation of a control rod 16 into and from a reactor core, and extracting the specific section data (section current data 32). The feature amount calculation step (step S150) is a step of calculating a feature amount for use in diagnosis of the control rod drive device 10. The abnormality diagnosis step (step S160) is a step of diagnosing a presence or absence of abnormality of the control rod drive device 10 based on the feature amount. In the feature amount calculation step (step S150), a natural frequency of the entire control rod drive device 10 is calculated based on an electrical parameter of the electric motor 11 (motor) and a mechanical parameter of the control rod drive device 10, and the feature amount is calculated by using the natural frequency and an applied voltage frequency to the electric motor 11 (motor).

The abnormality detection method according to the present embodiment can detect abnormality involving a pulse-like load fluctuation occurring in the control rod drive device 10 even at the time of such a drive condition of an electric motor that the D-axis current Id>>the Q-axis current Iq, or in a situation where resonance of a mechanical device to be diagnosed is unlikely to occur. Such an abnormality detection method can prevent a situation in which abnormality of the control rod drive device 10 cannot be detected, by using the electrical parameter of the electric motor 11 (motor) used in the control rod drive device 10 and the mechanical parameter of the control rod drive device 10.

(11) A program (control program PR20) according to the present embodiment is a program for causing a computer to perform a specific section extraction step (step S120), a feature amount calculation step (step S150), and an abnormality diagnosis step (step S160).

The program according to the present embodiment can achieve the abnormality detection method of the item (10).

As described above, the abnormality detector 20 according to the present embodiment can prevent a situation in which abnormality of the control rod drive device 10 cannot be detected, by using the electrical parameter of the electric motor 11 (motor) used in the control rod drive device 10 and the mechanical parameter of the control rod drive device 10.

The present invention is not limited to the aforementioned embodiment, and encompasses various modifications. For example, the aforementioned embodiment is described in detail for explaining the present invention in an easily understandable manner, and the present invention is not limited to those including all the above-described configurations. In addition, it is possible to replace part of the configuration of the embodiment with another configuration, and it is also possible to add another configuration to the configuration of the embodiment. In addition, it is possible to conduct addition, deletion, and replacement of another configuration in part of each configuration. In particular the features of the appended independent claims can be combined with any one or more than one of the features of the appended dependent claims.

**Claims**

1. An abnormality detector for a control rod drive device, comprising:

   a specific section extractor which divides, into specific section data, phase current caused to flow through an electric motor used in a control rod drive device which conducts an inserting operation and a pulling-out operation of a control rod into and from a reactor core, and extracts the specific section data;
   a feature amount calculator which calculates a feature amount for use in diagnosis of the control rod drive device; and
   an abnormality diagnoser which diagnoses a presence or absence of abnormality of the control rod drive device based on the feature amount, wherein
   the feature amount calculator calculates a natural frequency of the entire control rod drive device based on an electrical parameter of the electric motor and a mechanical parameter of the control rod drive device, and calculates the feature amount by using the natural frequency and an applied voltage frequency to the electric motor.

2. The abnormality detector for a control rod drive device according to claim 1, wherein

the electric motor is any one of a stepping motor, a magnet motor, and an induction motor.

3. The abnormality detector for a control rod drive device according to at least one of the previous claims, in particular claim 1, further comprising a frequency converter which converts the phase current to a frequency region signal, wherein

the specific section extractor extracts the specific section data by dividing the phase current at a predetermined time width after the phase current falls into a steady state after a specific time has elapsed or after a cyclic fluctuation of a current has reached to a specific number of times after the electric motor started driving,
the frequency converter converts the specific section data from a time region signal to a frequency region signal, and
the feature amount calculator calculates the natural frequency of the entire control rod drive device based on the electrical parameter of the electric motor and the mechanical parameter of the control rod drive device.

4. The abnormality detector for a control rod drive device according to at least one of the previous claims, in particular claim 3, wherein
the feature amount calculator extracts, as the feature amount, one or both of an amplitude component of (the natural frequency + the applied voltage frequency) and an amplitude component of (the natural frequency-the applied voltage frequency).

5. The abnormality detector for a control rod drive device according to at least one of the previous claims, in particular claim 3, wherein
the feature amount calculator sets a predetermined frequency width as delta, and calculates, as the feature amount, an integrated value of a frequency amplitude component in a range expanding from (the natural frequency-the frequency width delta) to (the natural frequency + the frequency width delta).

6. The abnormality detector for a control rod drive device according to at least one of the previous claims, in particular claim 4, wherein
the feature amount calculator calculates the natural frequency of the entire control rod drive device by using a function which contains the number of pole pairs and inductance of the electric motor as the electrical parameters of the electric motor and contains a composite inertia of the control rod drive device and the electric motor as the mechanical parameter of the control rod drive device.

7. The abnormality detector for a control rod drive device according to at least one of the previous claims, in particular claim 5, wherein
the feature amount calculator calculates the natural frequency of the entire control rod drive device by using a function which contains the number of pole pairs and inductance of the electric motor as the electrical parameters of the electric motor and contains a composite inertia of the control rod drive device and the electric motor as the mechanical parameter of the control rod drive device.

8. The abnormality detector for a control rod drive device according to at least one of the previous claims, in particular claim 6, further comprising:

a transmitter which transmits desired information to an outside, wherein
the transmitter transmits a result of the diagnosis of the control rod drive device conducted by the abnormality diagnoser to any one or more of a display, a speaker, and a lamp of the abnormality detector as well as a control device of the control rod drive device, a control device of the electric motor, and a control system of a power plant.

9. The abnormality detector for a control rod drive device according to at least one of the previous claims, in particular claim 7, further comprising:

a transmitter which transmits desired information to an outside, wherein
the transmitter transmits a result of the diagnosis of the control rod drive device conducted by the abnormality diagnoser to any one or more of a display, a speaker, and a lamp of the abnormality detector as well as a control device of the control rod drive device, a control device of the electric motor, and a control system of a power plant.

10. The abnormality detector for a control rod drive device according to at least one of the previous claims, in particular claim 1, wherein

the abnormality diagnoser acquires a plurality of feature amounts at a normal time as sample values, calculates an average value and a variance value of the sample values in advance, calculates a Mahalanobis distance at the time of diagnosis, and diagnoses the presence or absence of abnormality of the control rod drive device based on the Mahalanobis distance.

11. The abnormality detector for a control rod drive device according to at least one of the previous claims, in particular claim 1, wherein
the abnormality diagnoser acquires a feature amount at a normal time as a sample value, calculates an average value and a variance value of the feature amount at the normal time and a feature amount of specific section data desired to be diagnosed at the time of diagnosis, conducts a test on a difference between the average values based on the average values and the variance values, and diagnoses the presence or absence of abnormality of the control rod drive device.

12. An abnormality detection method for a control rod drive device, comprising:

a specific section extraction step of dividing, into specific section data, phase current caused to flow through an electric motor used in a control rod drive device which conducts an inserting operation and a pulling-out operation of a control rod into and from a reactor core, and extracting the specific section data;
a feature amount calculation step of calculating a feature amount for use in diagnosis of the control rod drive device; and
an abnormality diagnosis step of diagnosing a presence or absence of abnormality of the control rod drive device based on the feature amount, wherein
in the feature amount calculation step, a natural frequency of the entire control rod drive device is calculated based on an electrical parameter of the electric motor and a mechanical parameter of the control rod drive device, and the feature amount is calculated by using the natural frequency and an applied voltage frequency to the electric motor.

13. A non-transitory recording medium storing a computer readable program for causing a computer to perform:

a specific section extraction step of dividing, into specific section data, phase current caused to flow an electric motor used in a control rod drive device which conducts an inserting operation and a pulling-out operation of a control rod into and from a reactor core, and extracting the specific section data;
a feature amount calculation step of calculating a feature amount for use in diagnosis of the control rod drive device; and
an abnormality diagnosis step of diagnosing a presence or absence of abnormality of the control rod drive device based on the feature amount, wherein
in the feature amount calculation step, a natural frequency of the entire control rod drive device is calculated based on an electrical parameter of the electric motor and a mechanical parameter of the control rod drive device, and the feature amount is calculated by using the natural frequency and an applied voltage frequency to the electric motor.

# FIG. 1

EP 4 708 329 A1

# FIG. 2

16 — CONTROL ROD

15

14

13

12 — COUPLER

11 — ELECTRIC MOTOR

POWER SUPPLY — 17

# FIG. 3

20

COMPUTER — 900

| CPU — 901 | INPUT-OUTPUT I/F — 905 | INPUT DEVICE — 910 |
| ROM — 902 | COMMUNI-CATION I/F — 906 | OUTPUT DEVICE — 911 |
| RAM — 903 | MEDIA I/F — 907 | STORAGE MEDIUM — 912 |
| SSD — 904 | | CONTROL PROGRAM — PR20 |

# FIG. 4

START

STAND BY UNTIL STEADY STATE — S110

DIVIDE ELECTRIC MOTOR PHASE CURRENT INTO SPECIFIC SECTION DATA, AND EXTRACT SPECIFIC SECTION DATA — S120

CONVERT SPECIFIC SECTION DATA FROM TIME REGION SIGNAL TO FREQUENCY REGION SIGNAL — S130

CALCULATE NATURAL FREQUENCY OF ENTIRE CONTROL ROD DRIVE DEVICE BASED ON ELECTRICAL PARAMETER OF ELECTRIC MOTOR AND MECHANICAL PARAMETER OF CONTROL ROD DRIVE DEVICE — S140

CALCULATE FEATURE AMOUNT BY USING NATURAL FREQUENCY AND APPLIED VOLTAGE FREQUENCY TO ELECTRIC MOTOR — S150

DIAGNOSE PRESENCE OR ABSENCE OF ABNORMALITY OF CONTROL ROD DRIVE DEVICE BASED ON FEATURE AMOUNT — S160

TRANSMIT PRESENCE OR ABSENCE OF ABNORMALITY OF CONTROL ROD DRIVE DEVICE TO OUTSIDE — S170

END

# FIG. 5

## FIG. 6

FREQUENCY [Hz]

CURRENT [A]

— ABNORMAL DATA
— NORMAL DATA

NATURAL FREQUENCY−APPLIED VOLTAGE FREQUENCY [Hz]

NATURAL FREQUENCY+APPLIED VOLTAGE FREQUENCY [Hz]

# FIG. 7

EP 4 708 329 A1

# FIG. 8A

(Iq>>Id)

Id=1

ΔIq=1

Iq=100

Ia=100.005 -> 101

# FIG. 8B

(Id>>Iq)

Ia=100.005 -> 100.02

ΔIq=1

Iq=1

Id=100

Europäisches
Patentamt

European
Patent Office

Office européen
des brevets

## EUROPEAN SEARCH REPORT

**Application Number**

EP 25 19 9555

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/188018 A1 (MITSUBISHI ELECTRIC CORP [JP]) 5 October 2023 (2023-10-05) * the whole document * | 1-13 | INV. G21C17/00 G01M13/028 G21D3/00 |
| X | JP 7 499951 B2 (A. NONYMOUS) 14 June 2024 (2024-06-14) * abstract; figures * | 1-13 | ADD. G05B23/00 |
| X | JP 2010 133894 A (HITACHI LTD) 17 June 2010 (2010-06-17) * abstract; figures * | 1-13 | |
| X | JP 2018 105782 A (KAWASAKI HEAVY IND LTD) 5 July 2018 (2018-07-05) * abstract; figures * | 1-13 | |
| X | JP 2021 197158 A (MITSUBISHI POWER LTD) 27 December 2021 (2021-12-27) * abstract; figures * | 1-13 | |
| X | JP 2021 022311 A (RICOH CO LTD) 18 February 2021 (2021-02-18) * abstract; figures * | 1-13 | TECHNICAL FIELDS SEARCHED (IPC) G21C B05B G01M G05B G21D |

The present search report has been drawn up for all claims

| Place of search | Date of completion of the search | Examiner |
|---|---|---|
| Munich | 12 December 2025 | Opitz-Coutureau, J |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
 
& : member of the same patent family, corresponding
  document

EPO FORM 1503 03.82 (P4C01)

## ANNEX TO THE EUROPEAN SEARCH REPORT
## ON EUROPEAN PATENT APPLICATION NO.

EP 25 19 9555

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | | | Publication date | Patent family member(s) | | | Publication date |
|---|---|---|---|---|---|---|---|
| WO 2023188018 | A1 | | 05-10-2023 | CN | 119072667 | A | 03-12-2024 |
| | | | | DE | 112022006990 | T5 | 16-01-2025 |
| | | | | JP | 7260069 | B1 | 18-04-2023 |
| | | | | JP | WO2023188018 | A1 | 05-10-2023 |
| | | | | KR | 20240150470 | A | 15-10-2024 |
| | | | | US | 2025216459 | A1 | 03-07-2025 |
| | | | | WO | 2023188018 | A1 | 05-10-2023 |
| JP 7499951 | B2 | | 14-06-2024 | CN | 117136494 | A | 28-11-2023 |
| | | | | EP | 4322396 | A1 | 14-02-2024 |
| | | | | JP | 7499951 | B2 | 14-06-2024 |
| | | | | JP | WO2022215232 | A1 | 13-10-2022 |
| | | | | US | 2024120870 | A1 | 11-04-2024 |
| | | | | WO | 2022215232 | A1 | 13-10-2022 |
| JP 2010133894 | A | | 17-06-2010 | NONE | | | |
| JP 2018105782 | A | | 05-07-2018 | CN | 110139733 | A | 16-08-2019 |
| | | | | EP | 3563992 | A1 | 06-11-2019 |
| | | | | JP | 6144404 | B1 | 07-06-2017 |
| | | | | JP | 2018105782 | A | 05-07-2018 |
| | | | | KR | 20190083648 | A | 12-07-2019 |
| | | | | KR | 20210043738 | A | 21-04-2021 |
| | | | | KR | 20220134665 | A | 05-10-2022 |
| | | | | US | 2019339161 | A1 | 07-11-2019 |
| | | | | US | 2025035512 | A1 | 30-01-2025 |
| | | | | WO | 2018124182 | A1 | 05-07-2018 |
| JP 2021197158 | A | | 27-12-2021 | JP | 2021197158 | A | 27-12-2021 |
| | | | | JP | 2025061834 | A | 11-04-2025 |
| | | | | TW | 202202823 | A | 16-01-2022 |
| | | | | WO | 2021256358 | A1 | 23-12-2021 |
| JP 2021022311 | A | | 18-02-2021 | NONE | | | |

EPO FORM P0459

For more details about this annex : see Official Journal of the European Patent Office, No. 12/82

**EP 4 708 329 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010133894 A
- JP 2018105782 A